(19) Europäisches Patentamt
European Patent Office
Office européen des brevets

(11) Publication number : 0 557 068 A1

# (12) EUROPEAN PATENT APPLICATION

(21) Application number : 93301144.7

(22) Date of filing : 17.02.93

(51) Int. Cl.5 : C08G 59/40, B32B 17/10, B32B 27/38, C08K 5/55

(30) Priority : 18.02.92 GB 9203416

(43) Date of publication of application : 25.08.93 Bulletin 93/34

(84) Designated Contracting States : AT CH DE DK ES FR GB IE IT LI LU NL SE

(71) Applicant : PILKINGTON PLC
Prescot Road
St. Helens, Merseyside WA10 3TT (GB)

(72) Inventor : Varma, Kirikath Sukumar
Flat 4, Princes Court, 2 Queens Road
Southport PR9 9HN (GB)
Inventor : Parkes, David Peter
3 Gorsey Brow, Shevington Moor
Wigan, Lancashire WN6 0SP (GB)
Inventor : Holden, David
24 Mersey Road, Orrell
Wigan, Lancashire (GB)

(74) Representative : Jenkins, Peter David et al
PAGE WHITE & FARRER 54 Doughty Street
London WC1N 2LS (GB)

## (54) Curing epoxy resins.

(57) A method of producing a translucent laminate, the method comprising the steps of : providing a mixture of an epoxy resin and a curing agent therefor ; and curing the epoxy resin to form a translucent reaction product which forms an interlayer between two translucent panes, the curing step having a first phase in which the resin is partially cured relatively slowly, optionally at a relatively low temperature, and a second phase in which the curing of the resin is completed relatively rapidly, optionally at a relatively high temperature.

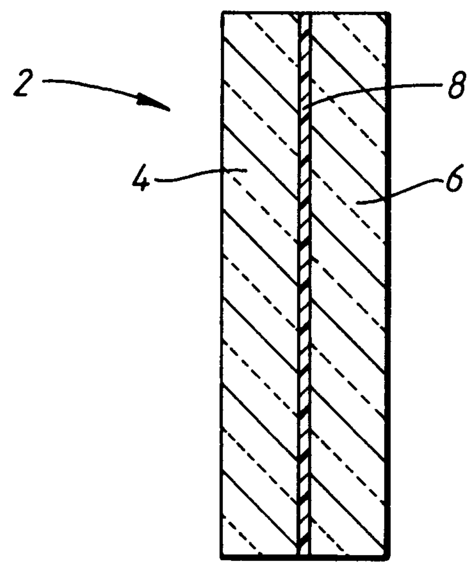


Fig.1.

EP 0 557 068 A1

The present invention relates to a method of curing plastics resins. The invention has particular application in the manufacture of a transluscent laminate having impact and/or fire resistance in which an interlayer of the laminate comprises the cured resin.

Epoxy resin reaction mixtures and reaction products, and their use in translucent laminates for example as windows for military helicopters, have been proposed previously.

Epoxy resin reaction mixtures and reaction products are used in fire resistant translucent laminates with the cured epoxy resin present in the interlayer of the laminate since the epoxy resin reaction products tend to form a char on heating, rather than to melt, thus retaining the structural integrity of laminate when it is subjected to a fire. Epoxy resins are well known as structural adhesives because of such properties as good wetting and the formation of strong, polar, high-energy bonds to a variety of substrates; low cure shrinkage without the evolution of low molecular weight substances; good mechanical properties and environmental stability. In accordance with the prior art, it is believed that structural adhesives with good elevated temperature capability require high glass transision temperatures (Tg) in order for the adhesive strength to be maintained at high temperatures. Cured epoxy resins with relatively high Tg have the fundamental drawback in that they are brittle so that on impact the brittleness of the epoxy resin can cause catastrophic failure of the adhesive joint. Thus it is known in the art that epoxy resin interlayers have been utilised in glass and plastics laminates to provide good fire resistant properties, but that the laminates do not have good impact resistance.

The present invention aims to provide a method for producing such translucent laminates which enables control over their properties, such as their impact resistance and their fire resistance, the translucent laminates optionally having a "plasticised" and/or "toughened" epoxy resin interlayer.

The present invention provides a method of producing a translucent laminate, the method comprising the steps of: providing a mixture of an epoxy resin and a curing agent therefor; and curing the epoxy resin to form a translucent reaction product which forms an interlayer between two translucent panes, the curing step having a first phase in which the resin is partially cured relatively slowly, optionally at a relatively low temperature, and a second phase in which the curing of the resin is completed relatively rapidly, optionally at a relatively high temperature.

The methods of the invention have particular application in the manufacture of impact and/or fire resistant translucent laminates for glazing purposes, the laminate having a translucent interlayer between two translucent panes, the interlayer comprising the cured epoxy resin which has been cast-in-place between the translucent panes.

Preferably, when the interlayer has impact resistance, the epoxy resin is in admixture with at least one additive which is adapted to react with, and/or form a separate phase in, the epoxy resin thereby to reduce the brittleness of the epoxy resin.

Preferably, the laminate has fire resistance in addition to impact resistance.

By controlling the conditions and curing time, especially for the first stage of the cure, the rigidity of the cured epoxy interlayer may be controlled in a desired manner as hereafter described. Thus, in a preferred aspect of the invention the time periods and curing conditions of the first and second phases are selected to provide a cured epoxy interlayer having a desired degree of rigidity. Preferably, the time periods and curing conditions are controlled to provide a cured epoxy interlayer having a Tg in the range 30°C to 45°C.

The first curing phase may be carried out for a period of from 1 to 20 days, more preferably from 3 to 20 days, more preferably from 3 to 7 days, and still more preferably from 3 to 4 days. The fist curing phase is preferably carried out at ambient temperature (i.e. about 10 to 30°C, more preferably at about 20°C.

The second curing phase is preferably carried out at a temperature of from 100 to 140°C, more preferably at a temperature of about 120°C. Preferably, the difference between the temperatures in the first and second curing phase is from 80 to 100°C. The second curing phase is preferably carried out for a period of from 2 to 5 hours.

As will be apparent to the skilled man, the times and temperatures of the two curing phases are both interrelated and dependent on other factors, such as the composition of the epoxy resin mixture and the desired properties of the cured epoxy resin product. Thus the curing process parameters may readily be selected by the skilled man depending upon the particular resin composition and the desired properties of the cured product. Preferably, the method is carried out so that optimal control over the properties of the resin product is achieved whilst still permitting the method to be carried out commerically acceptable production times i.e. without curing times being so long that this causes overlong production times (the most preferred total curing time typically being around 3 to 4 days).

The reaction mixture may additionally comprise a boron compound which is not a curing agent for the epoxy resin and is adapted to impart fire resistance to the composition. The boron compound is typically an organoboron compound such as a boroester or a boron anhydride which cannot act as a curing agent as a result of being sterically hindered and/or not having sufficient Lewis acid activity to cure the epoxy. The use of such a

boron compound is disclosed in our EP-A-0500317 published 26th August 1992, and the disclosures of that published specification are incorporated herein by reference.

The boron compound which is not a curing agent for the epoxy resin is an organoboron compound which may be sterically hindered boroester or a sterically hindered boric anhydride, the steric hindrance preventing it from functioning as a curing agent for the epoxy resin and will generally be a compound which is not as effective as a Lewis acid and does not react with the epoxy groups of the resin. However, it will be appreciated that boron compounds may be used which react only slowly with the epoxy resin so that, when the curing agent is present, it reacts preferentially with the epoxy resin so that there is little or no reaction between the boron compound which is not a curing agent and the epoxy resin. Suitable boron compounds for use in the present invention are disclosed in EP-A-0500317, and the disclosed boron compounds are incorporated herein by reference thereto. A typical organoboron compound which is not a curing agent for the epoxy resin is BORESTER 7, tri-(2-methyl-2,4-pentanediol) biborate, a colourless liquid containing 5.9% by weight of boron.

The reaction mixture preferably contains up to 50 parts by weight of organoboron compound which is not a curing agent for the epoxy resin per 100 parts by weight of epoxy resin, more preferably from 4 to 20 parts by weight of organoboron compound which is not a curing agent for the epoxy resin per 100 parts by weight of epoxy resin.

The epoxy resin may be an epoxidised Bisphenol-A or Bisphenol-F resin or an epoxidised resin of the novolac type and should be translucent when a translucent product is required eg as the interlayer of a fire-resistant laminate to be used as a window. Blends or mixtures of these epoxy resins may be used in accordance with the invention.

The curing agent may be of any type disclosed in EP-A-0500317 and is preferably trimethoxy boroxine (TMB) since that curing agent contains boron which enhances the fire resistance of the cured epoxy resin. The curing agents disclosed in EP-A-0500317 are incorporated herein by reference thereto.

The proportion of curing agent to base resin used will depend on the particular curing agent used, its reactivity and molecular weight and whether any cure "moderator", such as phenyl substitute alkyl alcohol is used, as described in UK Patent GB 2058076B, to control the rate of cure achieved with a trimethoxyboroxine curing agent. In general, the curing agent will be used in an amount of 4 to 70 parts by weight of curing agent per 100 parts by weight of epoxy resin. When a boron containing curing agent is used, such as trimethoxyboroxine, an amount in the preferred range of 4 to 20 parts by weight (more preferably 8 to 12 parts by weight) per 100 parts by weight of epoxy resin will usually be used. When an amine curing agent is used, an amount in the preferred range of 14 to 70 parts by weight per 100 parts per weight of epoxy resin will generally be appropriate.

If a phenyl substituted alkyl alcohol such as benzyl alochol is used to control the range of cure, it may be used in an amount of 1 to 10 parts by weight per 100 parts by weight of epoxy resin.

The additive may comprise a reactive diluent which is adapted to react with the epoxy resin as a cross linking agent thereby to plasticise the resultant cured composition. The reactive diluent may be a di- or polyepoxy compound, preferably aliphatic, and more preferably a diepoxide such as a diglycidyl ether or a non-glycidyl ether diepoxide, either of which may be unsubstituted or substituted between the epoxide groups thereof. Particularly preferred reactive diluents are polyglycol diepoxides. Alternative preferred reactive diluents are butadiene diepoxide; digylcidyl ether; butanediol diglycidyl ether; and diethylene glycol diglycidyl ether.

The additive may alternatively comprise a liquid rubber which is adapted to form a two phase microstructure with the epoxy resin thereby to toughen the resultant cured composition. The liquid rubber may be reactive or unreactive with the epoxy resin. The liquid rubber preferably comprises a butadiene-acrylonitrile copolymer having end functional groups which are reactive, such as carboxyl, hydroxyl, epoxy or vinyl groups, or unreactive, such as methyl groups.

When the additive to reduce brittleness consists of a reactive diluent, preferably the reactive diluent is present in an amount of about 5 to 15 wt%, more preferably about 7 to 12 wt%, based on the weight of the reaction mixture. When the reactive diluent is used in combination with a liquid rubber, the reaction mixture preferably contains about 2 to 10 wt% reactive diluent, more preferably about 4 to 8 wt% reactive diluent. When the additive to reduce brittleness comprises a liquid rubber in either the presence or absence of a reactive diluent, preferably the liquid rubber is present in an amount of about 0.1 to 5 wt% based on the weight of the reaction mixture, and the preferred amounts of particular rubbers are 0.1 to 5 wt% for epoxy- and hydroxy-terminated rubbers; 0.1 to 0.5 wt% for vinyl-terminated rubber and 0.1 to 3wt% for methyl-terminated rubber.

Other components which may be incorporated in the fire retardant reaction mixtures of the present invention include phosphates and phosphites, such as those proposed in UK patents GB 2092594B and GB 2058076B and also halogenated, usually chlorinated, organic compounds, useful for their flame retardant properties. Examples of such components are disclosed in EP-A-0500317 and the disclosed components are incorporated herein by reference thereto. A typical phosphate is tris-2-chloroethyl phosphate (TCEP), and typical

halogenated compounds are chlorinated diphosphate esters (available in commerce from Albright & Wilson Ltd of Warley, West Midlands, England as AMGARD V6 and AMGARD V7).

When the reaction mixture is to be used to improve fire resistance of a substrate, it will normally be applied to the substrate in liquid form e.g. by spraying, and cured in situ on the substrate. When the components used are highly reactive, it may be desirable to mix them only shortly before application e.g. by using a spray gun with a head in which the components are mixed immediately before being directed in spray form on to the substrate.

The reaction mixture may also include an interfacial coupling agent which acts as adhesion promotor between the epoxy resin and the glass/plastics transparent panes. A typical adhesion promotor is glycidoxy propyl trimethoxysilane sold by Union Carbide Corp. under the trade name Silane A-187.

When the reaction mixture is to be used in the production of a translucent laminate, it may be "cast" in a casting cell comprising two opposed outer plies, e.g. of glass or plastics spaced apart and separated from one another by a peripheral spacer between them, and cured in the cell. Such techniques are well known and are described in, for example, GB-A-2015427 and GB-A-2032844, and in EP-A-0200394. The glass plies may be of annealed or toughened (heat or chemically toughened) glass and the plastics plies may be of acrylic or polycarbonate plastics material. In the manufacture of such "cast-in-place" interlayers of laminates, preferably the liquid reaction mixture has a viscosity of from 50 to 4500 centipoise at a temperature of 25°C more preferably a viscosity of from 300 to 2000 centipoise at a temperature of 25°C. A typical final viscosity of a reaction mixture in accordance with the invention is 1000 centipoise at 25°C.

The reaction mixture may be cast between outer plies required in the final laminate, or between outer plies coated on their internal faces with a release agent. In the latter case, the cured layer of reaction mixture may be removed by dismantling the casting cell and separating it from the outer plies, and either used as a free standing slab or with an appropriate binder layer or layers to bind it to one or more facing translucent plies to form the required fire resistant laminate. The term "translucent" is used herein to describe products and materials which transmit light so that they are suitable for glazing applications, whether providing clear through vision, i.e. being transparent or colourless, or not.

Preferred translucent reaction mixtures and translucent reaction products in accordance with the invention have a light transmission, through a 2mm layer thereof, of at least 10%, more preferably at least 20%.

In accordance with one preferred aspect of the present invention, the brittle epoxy resin materials which are highly cross-linked thermoset plastics are converted or modified so as to provide increased impact resistance by "plasticising" the epoxy resin material so as to improve the impact resistance. The epoxy resin is plasticised by adding a "diluent" which changes the impact resistance and physical properties of the epoxy resin. The diluent can also reduce the viscosity of the epoxy resin mixture prior to the curing thereof. In addition to providing viscosity reduction, the diluent can be selected to provide modification of the properties of the cured resin. For example, the diluent may be employed to increase or decrease the deflection temperature; selectively to improve the chemical resistance; to change the electrical properties; and/or to impart flame resistance. The diluent may also be selected to vary the pot life of the epoxy resin and to reduce or increase the exothermic nature of the curing reaction, and in particular to vary the maximum exotherm.

Flame retardants such as tris- (2-chloroethyl) phosphate (TCEP) and other related phosphates and phosphites are known for use in epoxy resin mixtures for the manufacture of interlayers for laminates and these flame retardants can also act as non-reactive diluents for the resin. These diluents can lower the viscosity of the resin thereby to facilitate the use of the resin during the formation of a cast-in-place interlayer. Such non-reactive diluents have a small effect on physical properties when they are used at low concentrations and the chemical resistance, particularly the solvent resistance, of the epoxy resin system is more strongly affected by the addition of a non-reactive diluent. As the concentration of the non-reactive diluent is increased in the epoxy resin mixture, the properties of the cured system are correspondingly degraded. Some portion of the non-reactive diluent may be driven off during curing, consequently increasing the shrinkage and reducing the adhesion of the cured resin. Volatalisation of the diluent during exothermic heating, or during oven curing, can trap diluent bubbles thoughout a cast-in-place resin interlayer between two transparent panes of a laminate. When the epoxy resin interlayer is intended to be used in a fire-resistant laminate, we have found that the amount of the non-reactive diluent cannot be increased, in an attempt to "plasticise" the resin, to sufficiently large levels to provide impact resistance for the laminate because this has a consequential extremely detrimental effect on the fire performance of the laminate. Thus when a non-reactive diluent is utilised in an attempt to improve the impact resistance of an epoxy resin interlayer-containing laminate, this reduces the fire resistance since the interlayer is so physically and chemically degraded on heating that the integrity of the laminate fails. The degradation is caused by the increase in the concentration of potentially mobile species in the interlayer.

We have discovered that fire and impact resistant laminates may be reliably produced by employing epoxy

resin interlayers to which have been added reactive diluents, i.e. diluents that have reactive groups which react with the epoxy resin material thereby to form a chemically modified (i.e. plasticised) epoxy resin molecular structure in the interlayer. The reactive diluents, which are also referred to herein as reactive chain-extenders (RCEs), may contain epoxide reactive groups or reactive groups other than epoxides. We have found in particular that in order to preserve the physical properties of the epoxy resin interlayer at elevated temperatures, di- or polyepoxy reactive diluents are preferably employed. Such epoxy-containing reactive diluents do not tend to reduce the functionality (i.e. the epoxide equivalent weight) of the epoxy resin system and we have found that it is possible that the epoxy-containing reactive diluents can result in an increase in the cross-linking density of the epoxy resin system whilst increasing the spacing between adjacent backbone polymer chains (main chains) of the aromatic epoxy system. The effective mechanism by which the reactive diluents modify the epoxy resin is by the diluents being chemically incorporated into the epoxy resin cross-linked network. This accordingly changes the cross-link density of the epoxy system and thus the physical and chemical properties of the epoxy resin are also changed.

We have found that preferred epoxy-containing reactive diluents include diepoxides such as diglycidyl ethers and non-glycidyl ether diepoxides. Typical epoxy-containing reactive diluents are butadiene diepoxide; digylcidyl ether; butanediol diglycidyl ether; and diethylene glycol diglycidyl ether. Non-gylcidyl ether diepoxides having a chain length of up to about $C_8$ would impart sufficient flexibility to the epoxy resin structure without resulting in a two phase structure which would produce opacity in the cured resin. We have found that in particular two epoxy-containing reactive diluents which are suitable for use in the present invention are flexible polyglycol diepoxides (otherwise called polyoxyalkylene digylcidyl ethers) which are sold under the trade names DER 732 and DER 736 and are available from Dow Chemicals, UK. DER 732 is a long chain diepoxide and DER 736 is a shorter chain variant thereof. DER 732 has an epoxide equivalent weight of 305 to 335 mmol/kg, a viscosity of 55 to 100 centipoise at 25°C, a Colour Gardner (max) of 1, a density of 1.06 g/cm$^3$ and a flashpoint of 205°C. DER 736 has an expoxide equivalent weight of 175 to 205 mmol/kg, a viscosity of 30 to 60 centipoise at 25°C, a Colour Gardner (max) of 1, a density of 1.14 g/cm$^3$ and a flashpoint of 170°C. DER 732 and DER 736 are flexible polyglycol diepoxides of exceptionally low viscosity and light colour so that when they are incorporated at low concentrations into an epoxy resin mixture the mixture and the cured reacion product thereof are translucent.

The preferred diepoxides and diglycidyl ethers are compatible with other epoxy resins, in particular epoxy resins of the bisphenol A type, the bisphenol F type or the novolac type which are generally employed in the manufacture of epoxy resin interlayers for translucent glass and/or plastics laminates. These diepoxides are true epoxy resins and thus they react with epoxy curing agents and become an integral part of the molecular structure of the cured epoxy system. Thus when the diepoxide reactive diluents are employed in combination with the conventional epoxy resin, any suitable curing agent may be employed. The diepoxide additives when blended with conventional epoxy resins improve the flexibility, elongation and impact resistance of the cured resin system. The diepoxide additives also act as viscosity reducers for the epoxy resin system prior to curing and thus facilitate the curing operation.

Preferred reactive diluents having functional groups other than epoxide groups have hydroxyl groups (e.g. polypropylene glycol) or carboxyl groups (e.g. long chain dicarboxylic acids).

In accordance with a second preferred aspect of the present invention, the impact resistance of epoxy resin-containing interlayers of laminates is improved by enhancing the toughness of cured epoxy resins, without significant reduction in their thermal and mechanical properties, by the addition to the reaction mixture containing the epoxy resin prior to curing of low levels of liquid rubber, being either reactive or unreactive with the epoxy resin.

The use of liquid rubbers can enable the formation of a toughened two phase microstructure of rubber particles in the epoxy resin matrix. For reactive liquid rubbers, without being bound by theory, it is believed that during the initial stage of curing, the reactive liquid rubber is compatible with (i.e. forms a single phase with) the mixture of epoxy resin and curing agent. As curing proceeds, the molecular weight of the epoxide polymer increases as a result of polymerisation and cross-linking which causes phase separation between the epoxy resin and the liquid rubber. This forms a two phase microstructure consisting of small rubber particles dispersed in and bonded to the epoxy resin matrix. For the non-reactive liquid rubbers, these similarily form a two phase microstructure but the rubber particles are merely physically dispersed in, and not chemically bonded to, the epoxy resin matrix. Such microstructures have higher toughness than a conventional epoxy resin matrix because it is believed that on impact the mechanical energy is uniformly distributed throughout the matrix by the rubber particles, thereby reducing local stress concentrations which would otherwise tend to cause crack propagation and catastrophic failure of the epoxy resin matrix which itself is relatively brittle. This results in higher external impact loads being required to be applied in order to break the interlayer of a laminate. The improvement in impact performance is achieved without significant reduction of thermal and

mechanical properties of the cross-linked epoxy resin matrix since the epoxy resin matrix contains very little or substantially no rubber therein.

We have found that liquid reactive rubbers having the following general structure of a butadiene-acrylonitrile copolymer may be used with the present invention:-

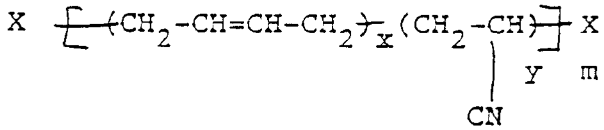

Typically the copolymer has a molecular weight (MW) of under about 10000. In this structure, X represents the end functional reactive group which can bond covalently with the epoxy resin system. We have found that liquid reactive rubber in accordance with the present invention can have the following reactive group X:- -COOH (forming a carboxyl-terminated liquid reactive rubber (CTBN)); -OH (hydroxyl-terminated liquid reactive rubber (HTBN)); 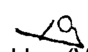 (epoxy-terminated liquid reactive rubber (ETBN)); and $-CH=CH_2$ (vinyl-terminated liquid reactive rubber (VTBN)). We have also found that in accordance with the present invention a non-reactive liquid rubber having the same general structure can be employed in which the functional group X is a methyl group ($-CH_3$) whereby the rubber is a methyl-terminated non-reactive rubber (MTBN) which gives a physically-blended composition in the resultant epoxy resin system.

The liquid runners VTBN, CTBN and HTBN are obtainable from BF Goodrich; USA and are available in commerce under the trade name "HYCAR". The liquid rubber ETBN is prepared by reacting bis-phenol A diglcycidyl ether with CTBN, and the ETBN is available from the company Convert of France. The resultant rubber-toughened epoxy resin is availble in commerce from the Uk agents of that French company, namely Whyte Chemicals, London under the trade name "EPICAR". The liquid non-reactive rubber MTBN is obtainable in commerce from Zion Chemials, UK.

The rubber ETBN is obtained by the following reaction:-

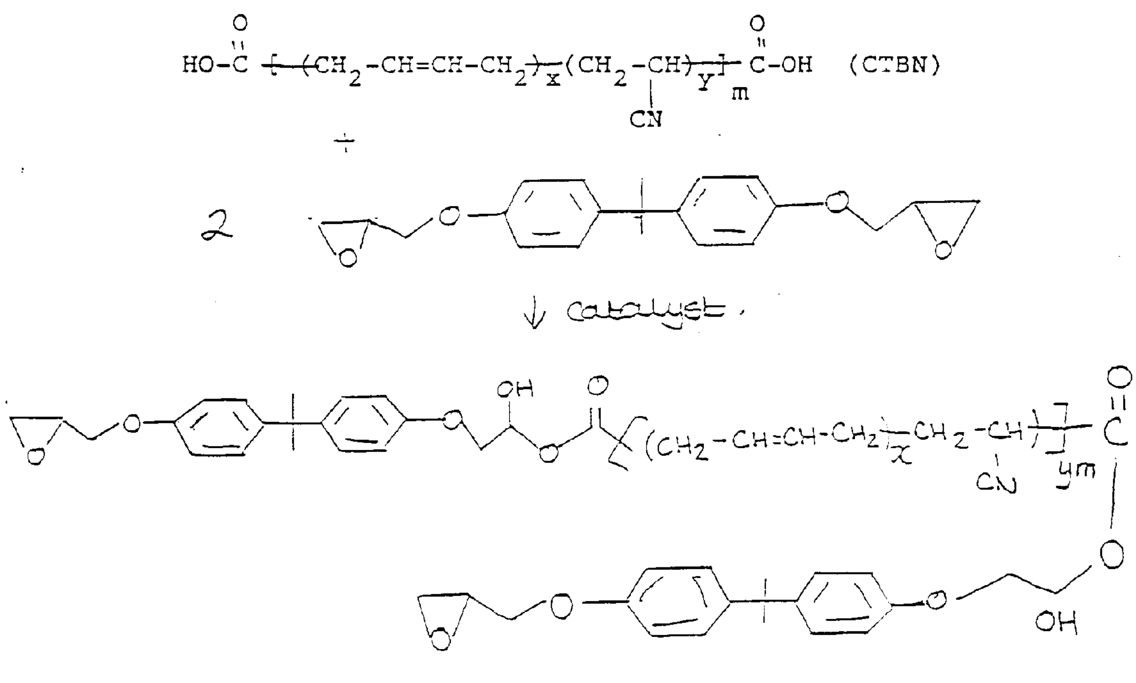


(ETBN)

Embodiments of the present invention will now be described by way of example only with reference to the

accompanying drawings, in which:-

Figure 1 is a schematic section through a glass laminate produced in accordance with the present invention;

Figures 2 to 6 are graphs showing the results of thermogravimetric analysis carried out on interlayers formed in accordance with the present invention; and

Figures 7 to 10 are graphs showing the results of the effect of gelling on the curing of the epoxy resin interlayer.

The invention is illustrated, but not limited, by the following Examples, in which translucent laminates in accordance with the invention were prepared and tested.

In the preparation of the reaction mixtures illustrated in the Examples, all parts and percentages are by weight unless otherwise stated.

The following Examples 1 to 9 illustrate the use of a two phase curing process to make reaction products from reaction mixtures having epoxy-containing reactive diluents in epoxy resin systems.

Examples 1 to 9

Table 1 shows the compositions of the epoxy containing reactive mixtures of Examples 1 to 9 which were used to form laminate interlayers in accordance with the present invention.

In Examples 1 to 9 the specified quantity of epoxy resin was placed in a reaction flask and the remaining components, apart from the TMB curing agent, were added in the specified quantities.

TABLE 1

| EXAMPLE | 1 | 2 | 3 | 4 | 5 | 6 | 7 | 8 | 9 |
|---|---|---|---|---|---|---|---|---|---|
| Bis-Phenol F | 63.6 | 62 | 64.5 | 61.1 | 61.1 | 62 | 61.1 | 61.1 | 61.1 |
| DER 732 (RCE)* | 7.5 | 10 | - | - | 10 | - | 10 | 10 | 10 |
| DER 736 (RCE)* | - | - | 7.5 | 10 | - | 10 | - | - | - |
| TCEP | 15.1 | 15 | 15 | 15.1 | 13.5 | 15 | 5.1 | 7.5 | 10.1 |
| AMGARD V6 | - | - | - | - | - | - | 10 | 7.6 | 5 |
| Borester 7 | 3.3 | 3.3 | 3.3 | 3.3 | 3.3 | 3.3 | 3.3 | 3.3 | 3.3 |
| Silane A-187 | 0.8 | - | - | 0.8 | 0.8 | - | 0.8 | 0.8 | 0.8 |
| Benzyl Alcohol | 1.3 | 1.3 | 1.3 | 1.3 | 1.3 | 1.3 | 1.3 | 1.3 | 1.3 |
| Trimethoxy boroxine (TMB) | 8.4 | 8.4 | 8.4 | 8.4 | 10 | 8.4 | 8.4 | 8.4 | 8.4 |

RCE = reactive chain extender

The mixture in the flask was warmed at between 20°C and 25°C while stirring and degassing using a standard one stage vacuum pump to remove any entrapped air and volatiles.

Degassing was discontinued and 8.4 parts of trimethoxyboroxine was added, as curing agent, to the above mixture with stirring. Degassing was recommenced and, after 15 minutes, stirring was stopped. Degassing was continued for a further 15 minutes without stirring.

A laminate cell was made up comprising two similar panes of 3mm float glass assembled in opposed facing relationship, spaced 1.8 mm apart by a 1.8 mm wide adhesive butyl tape between the panes around the peripheral margins of the panes which were pneumatically clamped together. The tape was not conintuous but a small gap, approximately 10cm in length, was left on one side for introduction of the interlayer material. The laminate cell was intended to simulate a preferred laminate construction in accordance with the invention and which is illustrated in Figure 1. As shown in Figure 1, the resultant laminate 2 comprises two panes of glass 2,4 separated and bonded together by an interlayer 6 comprising the cured epoxy-containing reaction mixture.

The reaction mixture described above was poured into the vertically held laminate cell to fill the cell completely and it was subsequently turned horizontal with the thickness of the interlayer being determined by the thickness of the butyl tape. A strip of adhesive butyl tape was inserted to fill the gap that had been left. The interlayers in the laminates were then cured by being gelled (as discussed in greater detail hereinbelow) at room temperature (about 20°C) for three days and then curing was completed by the cells being placed horizontal in an oven for three hours at 120°C. The resulting laminate, comprising two panes of clear float glass bonded to an interlayer derived from the epoxy resin based reaction mixture, was substantially transparent. Samples of laminate prepared in this way were subjected to fire tests described at A, B, C, D and E below which are of generally increasing stringency and the results are shown in Table 2.

A. The laminate was exposed to a torch flame at about 1200°C. It was deemed to have passed the test if there was no flame penetration beyond the non exposed face after 10 minutes.

B. A sample of the laminate measuring 31 cm x 21 cm in plan was mounted in a steel frame and heated using an electric furnace in accordance with BS 476: Parts 20 and 22 : 1987, and the non exposed face of the specimen monitored during the 30 minutes heating period. It was deemed to have passed the test if the stability and integrity of the unexposed face, determined in accordance with BS 476, was maintained for 30 minutes.

C. As test B, but using a pressurised gas fired furnace to test a sample measuring 86 cm x 86 cm in plan in a wooden frame.

D. As test B, but using a pressurised oil fired furnace to test a sample measuring 86 cm x 86 cm in plan in a metal frame.

E. As test B, but using a BSI certified testing facility to test a sample measuring 90 cm x 110 cm in plan.

The laminates were also tested for impact resistance using the tests specified in accordance with BS 6206. Table 2 shows that Examples 1 to 9 attain at least Class C of the impact test under BS 6206. This shows that the addition of reactive plasticiser has improved the impact resistance of the laminate. Furthermore, those interlayer samples which had lower values of Tg, such as Examples 2 and 5, tended to have the best impact performance and could meet Class B of BS 6206. In addition, the interlayers of Examples 1 to 9 show good fire resistance. Thus Table 2 demonstrates that by using the epoxy-containing reactive diluent in epoxy resin systems for interlayers of translucent laminates, fire resistance can be maintained in combination with considerably improved impact resistance.

From the experimental results, we have determined that for an epoxy resin which has been plasticised with a reactive diluent as described hereinabove, the value of Tg is strongly related both to the fire and impact resistance. For adequate fire resistance the value of Tg should be greater than or equal to about 30°C and for adequate impact resistance the value of Tg should be less than or equal to about 45°C. Fire resistance requires a minimum value of Tg of about 30°C otherwise when the interlayer is heated it rapidly softens so that it cannot hold the weight of the pane which faces the fire and laminate integrity fails by cohesive failure of the interlayer. Impact resistance in contrast requires a maximum value of Tg of about 45°C otherwise the interlayer, and the laminate incorporating it, are too brittle. Thus with plasticised epoxy resins in accordance with the invention there is a preferred range for Tg of from about 30°C to about 45°C, within which acceptable fire and impact resistance can be obtained. The value of Tg and the performance of the laminate can vary with variation in the nature and quantity of the other constituents in the reaction mixture. However the Tg value can be controlled by the plasticiser addition.

TABLE 2

| Example | Tg(°C) (1 Hz) | Impact (BS 6206) Class C | Class B | Fire Resistance a | b | c | d | e |
|---|---|---|---|---|---|---|---|---|
| 1 | 36 | ✓ | X | ✓ | ✓ | ✓ | ✓ | ✓ |
| 2 | 30 | ✓ | ✓ | ✓ | ✓ | ✓ | ✓ | ✓ |
| 3 | 44 | ✓ | X | ✓ | ✓ | ✓ | - | - |
| 4 | 39 | ✓ | X | ✓ | ✓ | ✓ | ✓ | ✓ |
| 5 | 34 | ✓ | ✓ | ✓ | ✓ | ✓ | ✓ | - |
| 6 | 39 | ✓ | X | ✓ | ✓ | ✓ | ✓ | ✓ |
| 7 | 39 | ✓ | - | ✓ | ✓ | ✓ | - | - |
| 8 | 36 | ✓ | - | ✓ | ✓ | X | - | - |
| 9 | 34 | ✓ | - | ✓ | ✓ | ✓ | - | - |

✓ = Passed
X = Failed
\- = Not tested

TABLE 3

| Example | Elongation at Break % |
|---|---|
| 1 | 48.0 |
| 2 | 67.5 |
| 4 | 52.5 |
| 5 | 85.6 |

It will be noted from Examples 2 and 4 that for a given amount of plasticiser, DER 732 has a greater degree of plasticising than DER 736, as manifested by the increase in Tg and the reduced impact strength of Example 4 as compared with Example 2. It is believed that this reflects the fact that DER 732 has a longer chain structure than DER 736 and thus it has a greater plasticising effect as the epoxy resin matrix.

In order to assess the improved plasticity of the epoxy resin interlayer, samples of interlayers were subjected to elongation-to-break-tests in accordance with ASTM D412-68 which is a standard method of tension testing of rubbers. This testing method tests the effect of the application of a tensile load to vulcanised rubber and similar rubber-like materials at room temperature and also at elevated temperatures. The results of these tests on the interlayers of Examples 1, 2, 4, 5 are shown in Table 3 which shows the elongation at break (%)

(i.e. the extension per unit length of a uniform section of a specimen resulting in the application of a tensile force applied to a specimen). For reference purposes, an elongation at break of 252% was recorded for polyvinyl butyral which is regarded as an excellent viscoelastic material and is commonly employed as an interlayer in non-fire resistant impact resistant laminates.

It will be noted from the results of Table 3 that the interlayers formed in accordance with the Examples have good elongation at break. The addition of epoxide-containing reactive diluents to epoxy resins can considerably reduce the brittleness of epoxy resin interlayers, thereby giving the improved impact resistance of the laminates incorporating such interlayers.

The following Examples 10 to 19 illustrate the use of a two phase curing process to make reaction products from reaction mixtures having liquid rubber toughening additives in epoxy resins.

<u>Examples 10 to 19</u>

These examples illustrate the improvement of impact resistance of epoxy resin interlayers in fire resistant laminates when liquid rubbers are added to the epoxy resin prior to curing in a two phase curing step in accordance with the present invention. Table 4 shows the compositions of the Examples and the results of the impact and fire retardent tests and also some physical properties of the resultant interlayer. The amount and type of liquid rubber added is indicated in Table 4. The base epoxy resin composition comprises 71.1 parts by weight bis-phenol F; 15.1 parts by weight TCEp; 3.3 parts by weight Borester 7; 0.8 parts by weight Silane A-187; 1.3 parts by weight benzyl alcohol and 8.4 parts by weight trimethoxy- boroxine (TMB). The epoxy resin-containing mixture was formulated as disclosed above with reference to Examples 1 to 9 and in addition, depending on the end-group functionality of the liquid rubbers, the epoxy resin system containing the rubbers was either normally blended with mechanical stirring or blended by high-shearing in a high shear mixer. More particularly, resins containing MTBN and ETBN (low viscosity grade) were subjected to normal stirring which permitted a homogeneous blend to be achieved and resins containing VTBN, HTBN and ETBN (high viscosity grade) were subjected to high shear in a high shear mixer to achieve the required homogeneity. The cast-in-place laminate cells were then fabricated and cured as described above with reference to Examples 1 to 9. In particular, the interlayers in the cells were cured by being held at ambient temperature (around 20°C) for three days in order to gel the epoxy resin and then the curing step was completed by heating the cells to 120°C in an oven for three hours.

TABLE 4

| Example | Rubber added | Amount (wt%) of rubber addition | Tg($^oC$) [Error = ± $2^oC$] | (%) Haze | % Light trans-mission (T) | Impact Resistance (BS 6206) Class C | Class B | Fire Retardance Tests (550 mm x 750mm size) (30 min integrity) |
|---|---|---|---|---|---|---|---|---|
| 10 | VTBN | 0.1 | - | >29 | > 87 | ✓ | - | ✓ |
| 11 | ETBN | 0.5 | 51 | < 0.5 | >87 | ✓ | X | ✓ |
| 12 | ETBN | 2 | 49 | < 0.5 | >87 | ✓ | X | ✓ |
| 13 | ETBN | 5 | 42 | < 0.5 | >87 | ✓ | ✓ | X |
| 14 | ETBN | 10 | 32 | < 0.5 | >87 | ✓ | ✓ | X |
| 15 | HTBN | 0.5 | 50 | < 0.5 | >87 | ✓ | - | ✓ |
| 16 | HTBN | 2 | 45 | < 0.5 | >87 | ✓ | - | ✓ |
| 17 | MTBN | 0.1 | 49 | 0.5-1.0 | >87 | ✓ | X | ✓ |
| 18 | MTBN | 0.3 | 45 | 0.5-1.0 | >87 | ✓ | X | X |
| 19 | MTBN | 0.5 | 41 | 0.5-1.0 | >87 | ✓ | ✓ | X |

✓ = Passed
X = Failed
\- = Not tested

Referring to Table 4, it will be seen that the addition of liquid rubbers, such as VTBN, ETBN, HTBN and MTBN, can give good impact resistance. Thus all Examples 10 to 19 passed Class C of BS 6206, and Examples 13,14 and 19 passed Class B of BS 6206.

The fire retardance tests were carried out by subjecting a sample of the laminate measuring 550 mm x 750 mm to a heating test according to BS 476, Parts 20 and 22. Table 4 indicates whether or not the integrity of the unexposed face of the laminate was still maintained after a test period of 30 minutes in the fire resistance tests.

It will be noted from Table 4 that with Examples 10 to 19 fire retardance preformance generally improves with higher Tg values, although the best impact performance is achieved by Examples 13, 14 and 19 which had the lowest Tg values. Table 4 also shows that if a larger amount of rubber is present in the interlayer fire retardance is reduced and that if a smaller amount of rubber is present in the interlayer the higher Class B impact test is not met (e.g. compare Examples 13 to 15 and Examples 17 to 19). The properties of the laminate (including the Tg, the impact resistance and the fire resistance) may be varied by changing the nature and amounts of the various components of the interlayer. Whilst the value of Tg is not the sole determinant of the fire and impact performance, we believe that as a very general rule a Tg of above about 45°C is likely to give sufficient fire performance, coupled with safety performance (i.e. impact resistance), in the laminate. It will be noted that MTBN as a non-reactive rubber has a greater effect per unit weight % on Tg than the reactive rubbers, It is believed that this is due to the non-reactive rubber molecules being more mobile since they are not chemically bonded to the epoxy resin. This also results in the non-reactive rubbers reducing the fire retardance even at low concentrations due to their greater voletility and due to the increased softening of the interlayer.

In accordance with a preferred aspect of the present invention, a combination of liquid rubber toughening and reactive diluent plasticising can be used to provide impact resistant laminates. The following Example 20 illustrates the combination of liquid rubber toughening and reactive diluent plasticising, the curing of the interlayer being by a two phase process step.

Example 20

Table 5 illustrates the constituents of the epoxy resin composition of Example 20 which comprises both an epoxy-containing reactive diluent (DER 736) as a reactive chain extender and also ETBN as a rubber toughening agent.

The formulation was cast in the manner described hereinabove with reference to Examples 1 to 9 and then the cast-in-place epoxy resin interlayer between the two transparent panes was gelled for three days at room temperature and then cured at 120°C for three hours. The epoxy resin interlayer had a glass transition temperature of around 44 to 45°C. The laminate was subjected to the BS 6206 impact test and passed Class C thereof. The laminate was subject to a fire resistance test and had 30 minutes integrity when the laminate, having a size of 550 mm x 750 mm, was subjected to a fire test having an electrically-heated furnace following the heating time specified in the standard BS 476 Parts 20 and 22 fire resistance test.

TABLE 5

| Example 20 | % wt | Chemical/Physical Function |
|---|---|---|
| Bis-Phenol F | 65.1 | Base Epoxy Resin |
| DER 736 | 5.0 | Epoxy-containing plasticiser(RCE) |
| TCEP | 7.5 | Chlorinated fire-retardant |
| Amgard $V_6$ | 7.6 | Chlorinated fire-retardant |
| Benzyl Alcohol | 1.3 | Cure modifier |
| Silane A-187 | 0.8 | Adhesion promoter |
| ETBN | 1.0 | Epoxy-terminated liquid rubber |
| TMB | 8.4 | Catalyst |
| Borester 7 | 3.3 | Source of borate glass |

In an attempt further to assess the effect of liquid rubber toughening and the reactive plasticising agents on the thermal breakdown characteristics and fire resistance of the epoxy resin interlayer, thermogravimetric analysis (TGA) and Fourier transform infrared studies (FTIR) were carried out on the fire resistant and impact resistant laminates containing the rubber toughened and plasticised epoxy resin interlayers. The thermogravimetric and Fourier transform infrared analysis is a very sensitive technique for measuring decomposition profiles of organic materials. In addition, the decomposition products can be identified in most cases. The thermogravimetric analyses of five samples A to E are shown in Figures 2 to 6.

Sample A comprises the interlayer of Example 28 (see hereinbelow) i.e. having TCEP as a non-reactive diluent but no rubber or reactive plasticisers. This interlayer gives very good fire-retardant performance. The graph produced during the thermogravimetric analysis shows that the temperature of maximum decomposition of the interlayer (Tmax) is around 430°C. Sample B comprises the interlayer of Example 11 in which 0.5 wt% of ETBN rubber is combined with the epoxy resin composition of Example 28. The temperature of maximum decomposition (Tmax) is still around 430°C but the interlayer also has impact resistant properties. Sample C comprises the interlayer of Example 19 in which 0.5 wt% MTBN has been added to epoxy resin composition of Example 28. Figure 4 shows that the Tmax has been reduced to around 400°C and the thermogravimetric analysis shows that there are many flammable volatiles at lower temperatures. The material of Sample C has good impact properties, as shown in Table 4, resulting from the physical blending of the rubber in the epoxy resin matrix with no interfacial covalent bonding between the rubber molecules and the epoxy matrix. Sample D comprises an interlayer of an epoxy resin including 10 wt% DER 732 as epoxy-containing reactive plasticiser acting as a reactive chain extender. The thermogravimetric analysis shown in Figure 5 indicates that there are two Tmax points at 330°C and 440°C, these probably corresponding to the decomposition of the "soft" and "hard" units in the epoxy structure (i.e. the cross-linking plasticiser and the epoxy resin backbone molecules respectively). The interlayer of Sample D has very good impact properties, having a Tg of 30°C and good fire retardance for laminates up to about $1m^2$ in area. Sample E comprised an interlayer having an addition of 10 wt% DER 736 as an epoxy-containing reactive plasticiser. The thermogravimetric analysis shown in Figure 6 indicates that there are two Tmax points at 330°C and 440°C for the "soft" and "hard" units in the epoxy resin structure. The interlayer provided impact resistance meeting Class C of BS6206, the epoxy resin having a Tg of around 39°C and good fire performance for laminates up to about $1m^2$ in area.

In accordance with a preferred aspect of the present invention, cast-in-place epoxy resins are gelled prior to final curing in an oven in order to control the glass transition temperature (Tg) and hence the mechanical properties of the resultant cured resin which can form an interlayer in a translucent laminate.

As has been discussed hereinabove, the value of the glass transition temperature for an epoxy resin interlayer has a substantial effect on the mechanical properties, particularly the impact resistance, of the epoxy resin interlayer. We have discovered that by gelling the cast-in-place epoxy resin prior to curing, the glass transition temperature can be varied in a controlled manner. Typically, the gelling is carried out at ambient temperatures for a period of from about 3 to about 20 days, more preferably from about 3 to about 7 days. The selected gel period can depend on a number of factors, including whether Tg varying additives are present in the reaction mixture, the temperature of gelling, the nature of the resin, the production time permitted for gelling, etc. More particularly, we have determined empirically that for every 24 hours a cast-in-place epoxy resin sample is gelled, a rise of approximately 2°C in Tg is obtained. Other empirical results which we have determined suggest that an epoxy resin interlayer having a Tg over about 45°C will not achieve Class C under the BS 6206 impact resistance standard for a material which is either plasticised by using a non-reactive plasticiser (such as TCEP) or by a reactive plasticiser, such as the epoxide containing reactant diluents discussed hereinabove. In other words, we have determined that in order to achieve Class C impact performance under BS 6206 on a sample with a Tg greater than about 45°C, it is necessary to toughen the epoxy resin matrix with the addition of a liquid rubber. For fire performance, we have empirically determined that for expoxy resins having glass transition temperatures as low as about 30°C, average fire performance can be obtained for laminates up to about $1m^2$ in area, but in order to obtain good performance for laminates up to about $2m^2$ in area, a minimum value of the glass transition temperature of about 45°C is required. This is because for larger laminates a stiffer interlayer matrix is required (i.e. a higher Tg) in order that the interlayer has sufficent structural integrity when subjected to a fire in order to retain the laminate structure together and to prevent catastrophic break up of the laminate. This value also probably re-presents the upper limit of the glass transition temperature which enables Class C impact performance to be obtained for plasticised epoxy resin materials. Accordingly, the use of liquid rubber toughening of epoxy resin interlayers, either on its own or in combination with a plasticiser, to obtain impact performance without substantially lowering the glass transition temperature was achieved.

The following Examples 21 to 27 illustrate the combination of gelling control with liquid rubber toughening and /or reactive diluent plasticising in accordance with the present invention and show in particular how gelling

can vary the Tg of the resultant reaction product to form an interlayer of a translucent laminate.

Examples 21 to 23

Table 6 illustrates the constituents of the respective epoxy resin compositions of Examples 21 to 23 which comprise an epoxy-containing reactive diluent (DER 736 or DER 732) as a reactive chain extender. The compositions were made in accordance with the method of Examples 1 to 9. After formation of respective casting cells, the interlayers were gelled at ambient temperature for selected periods prior to heat curing in an oven for three hours at a temperature of 120 C. A number of samples of each Example were made and each sample was gelled for a respective period in order to determine the relationship between the length of gel time and the Tg value of the cured reaction product. The results are shown in Table 7.

Tables 6 and 7 show that with epoxy resins containing reactive diluents, the value of Tg increases with gel time. This gives the possibility of control of Tg by varying the gel time.

Examples 24 to 25

Table 8 illustrates the constituents of the respective epoxy resin compositions of Examples 24 to 25 which comprise a liquid reactive rubber (ETBN) as a toughening additive. After formation of respective casting cells, gelling and heat curing in accordance with the method of Examples 21 to 23, samples of each Example were tested to determine the relationship between the length of gel time and the Tg value of the cured reaction product. The results are shown in Table 9. Tables 8 and 9 show that with epoxy resins containing liquid reactive rubbers, the value of Tg also increases with gel time.

Examples 26 to 27

Table 10 illustrates the constituents of the respective epoxy resin compositions of Examples 26 to 27 which comprise the combination of an epoxy-containing reactive diluent (DER 736) as a reactive chain extender and a liquid reactive rubber (ETBN) as a toughening additive. After formation of respective casting cells, gelling and heat curing in accordance with the method of Examples 21 to 23, samples of each Example were tested to determine the relationship between the length of gel time and the Tg value of the cured reaction product. The results are shown in Table 11. Tables 10 and 11 show that with epoxy resins containing both reactive diluents and liquid reactive rubbers, the value of Tg also increases with gel time.

Examples 28 to 31

Table 12 illustrates the constituents of the respective epoxy resin compositions of Examples 28 to 31 which include a non-reactive diluent (TCEp) and do not include either an epoxy-containing reactive diluent (DER 736) as a reactive chain extender or a liquid reactive rubber (ETBN) as a toughening additive. After formation of respective casting cells, gelling and heat curing in accordance with the method of Examples 21 to 23, samples of each Example were tested to determine the relationship between the length of gel time and the Tg value of the cured reaction product. The results are shown in Table 13. Tables 12 and 13 show that with epoxy resins containing no reactive diluents or liquid reactive rubbers, the value of Tg also increases with gel time.

The composition of Example 28 contains no liquid rubber or reactive plasticiser. As a comparison with Examples 1 to 20 this Example on curing produced a laminate with an interlayer having a Tg of 52°C. The laminate did not meet Class C of Impact Test BS 6206 but it did meet all of the fire resistance tests as specified in Table 2. The cured reaction product had an elongation at break, as specified with reference to Table 3, of 42.5%. The laminate had, with reference to Table 4, a haze of <0.5% and a light transmission of >87% and the product passed the fire retardance test as specified in Table 2. In comparison with the present invention, a composition which was the same as that of Example 28 was cured using a one phase cure, i.e. with no gelling in which the laminate was heated to around 120°C for about 3 hours after the uncured epoxy resin mixture had been cast-in-place between the two translucent panes. The resultant cured product had a Tg of around 42°C. This demonstrates that the use of a two phase cure in accordance with the present invention enables control over the value of Tg to be achieved, and in particular enables the Tg of an epoxy resin interlayer to be increased in a controlled manner.

Interlayers or translucent laminates are generally required to be resistant to degradation by the ultra-violet light in sunlight which can cause yellowing of the interlayer. It is thus envisaged in accordance with the invention that the skilled man may incorporate known additives for achieving UV stability into the interlayer compositions. Typical additives are Irganox 1010 and Irganox 1135, each sold by Ciba-Geigy, and dibutyl tin dilaurate

(DBTL), sold by Aldrich Chemical Company of England.

We have found that the use of the gelling technique of the present invention can assist in providing UV stability of the interlayer. This is described in Example 32 below.

Example 32

An epoxy resin interlayer was formed having the composition by weight Bis-Phenol F 71.1%; Boroester 7 18%; TCEP 0.4%, Benzyl alcohol 1.3%; Silane A-187 0.8%; and TMB 8.4%. The composition was gelled for 3 days at ambient temperature and then was cured at 120°C for 3 hours. The interlayer was subjected to a UV test, known in the art as a QUV test in which the interlayer was irradiated by UVA radiation having a peak emission at 340 nm by using a UVA-340 lamp in a QUV weathering tester sold by the Q-Panel Company of Cleveland, Ohio, USA. After a test period of 500 hours, the Yellow Index of the interlayer (as detemined by ASTM D1925-70 (Reapproved 1977)) was 5.0. This is an acceptable Yellow Index because a Yellow Index of greater than 8.0 is unacceptable for glazing.

In contrast, when the same composition was used, without being gelled, at 120°C for 8 hours, the Yellow Index was unacceptably high at greater than 10.0.

Example 33

This example demonstrates how the gelling technique of the present invention can improve the fire retardance of a laminate. An epoxy resin composition having the formulation by weight: Bis-Phenol F 71.1%; Boroester 7 18.4%; Benzyl alcohol 1.3%; Silane A-187 0.8% and TMB 8.4% was made up into laminate samples. For sample 1 the epoxy resin had been cured at 120°C for 6 hours and for sample 2 the epoxy resin had been gelled at ambient temperature for 4 days and then was cured at 120°C for 3 hours. Both cured epoxy resin interlayers had a Tg of 49°C. However, sample 1 only survived a fire test for 10 minutes whereas sample 2 survived the same fire test for 35 minutes. Both samples exhibited satisfactory weathering when subjected both to a QUV test for 335 hours and to an extended heating in an oven at 130°C for 120 hours.

The use of a gelling technique for curing, in combination with rubber toughening and the addition of a reactive plasticiser, enables the modification of the mechanical and thermal properties of an epoxy resin system, which has preferably been cured with TMB, by changing the glass transition temperature Tg. The enables both fire and impact resistance to be obtained reliably in the laminate. The combination of these aspects of the invention effectively allows the properties of the epoxy resin system to be controlled macroscopically. This control is in addition to other chemical techniques, such as by changing the cross-link density by using flexibilisers and toughening by using liquid rubbers. A combination of all three of these techniques provides a broad method of achieving epoxy resin interlayer materials having the desired properties with consistent quality. Thus for example a plasticiser addition can reduce the Tg and give improved impact performance and the gelling technique can be employed to increase the Tg to provide adequate fire retardance. The gelling technique is discussed in greater detail hereinbelow.

In order to assess the effect of gelling prior to curing of the epoxy resin we carried out experiments using phenyl glycidyl ether (PGE) as a model epoxy compound which is cationically polymerised using TMB as the Lewis acid catalyst. The use of PGE and TMB constitutes a kinetic model, the polymerisation reaction of which simulates reactions between epoxy resins of the bisphenol A and F and digylcidyl novolac types and TMB. In one set of experiments, polymerisation was carried out at three different gelling temperatures, namely -20°C, +5°C and +23°C for a period of 3 days before the final curing heat treatment as 120°C for three hours. Aliquots of the reaction mixtures were analysed by gel permeation chromatography (GPC) using a UV detector (at 254nm) against Polystyrene Standards. The results are shown in Figure 7. Figure 7 shows that the highest molecular weight polymer concentration is obtained at the lowest gelling temperature of -20$^{C}$. The peak at 36 minutes is PGE monomer and the peaks from 27 to 30 minutes are most probably either neutral terminated oligomers or PGE/TMB complexes. Figure 8 shows the GPC of the sample gelled at -20°C and then heat cured. These experimental results strongly support a hypothesis that in epoxy-TMB systems, the active chain-end to monomer transfer termination process is competitive with polymer growth. Therefore, the degree of polymerisation is particularly temperature dependent in the gelling phase of the cure. When epoxy resins are used to form fire retardant interlayers, variations in the gelling temperature may control the degree of polymerisation (DP) is important because the degree of polymerisation has a profound effect on the mechanical properties, notably the impact resistance, of the materials. We have determined that the total gelling time also affects the conversion of the monomers to the higher molecular weight polymer.

Further experiments to assess the effect of gelling parameters on mechanical properties of the resultant cured resin were carried out with a commercially available bis-phenol F resin, mixed with a small proportion

of an aliphatic diglycidyl ether (DER 732) as a plasticising reactive chain extender. Laminate samples were formed and gelled at room temperature for up to five days and all the samples were then cured at 100°C for three hours. The polymeric components from the gelled and cured samples were extracted with chloroform and were analysed by GPC using a UV detector (at 254mn) against Polystyrene Standards. The results are shown in Figures 9 and 10.

In all, ten peaks were observed in the gel permeation chromatography and Figures 9 and 10 highlight the relevant peaks of interest. Figures 9 and 10 show the relationship between a given molecular weight species (expressed as area percent) and the number of hours gel time at ambient temperature. From these plots, it is immediately obvious that the high molecular weight (MW) species (ca.10,000) is at a maxiumum at 96 hours. Significant changes in molecular weight occur between 24 and 48 hours and again between 72 and 96 hours. These results would seem to suggest that there may be at least three major stages of cure, namely a linear polymer growth stage which gives rise to a sharp increase in molecular weight material; a pre-network formation stage where the increase in high MW species would be significantly less; and finally the fully cross-linked network forms which again sharply increases the higher MW species.

The species with MWs of 2800-1000 probably represents terminated short polymer chains and the two species at MW 1000-6000 and TCEP 310-230 are identifiable as the resin oligomers and TCEP (MW 286) (which is a fire retardant additive), respectively. The concentration of material of MW 2800-1000 and 1000-600 would be expected to decrease up to 96 hours at the expense of the MW 10000 species and this is clearly seen. The concentration of the fire retardant additive TCEP should be constant as observed.

These results show that the degree of polymerisation and hence the mechanical properties of the epoxy interlayers are both temperature and time sensitive in the gelling phase of cure. It is therefore imporant to employ a curing schedule which includes a gelling phase which is carefully controlled so as to obtain consistent quality of material with respect to fire retardance and impact safety properties.

TABLE 6

| Constituents | Example No. | | |
|---|---|---|---|
| | 21 (% wt) | 22 (% wt) | 23 (% wt) |
| Bis-Phenol F | 61.1 | 61.1 | 61.1 |
| DER 732 | - | 10 | 10 |
| DER 736 | 10 | - | - |
| TCEP | 7.5 | 15.1 | 5.1 |
| Benzyl Alcohol | 1.3 | 1.3 | 1.3 |
| Borester 7 | 3.3 | 3.3 | 3.3 |
| Silane A-187 | 0.8 | 0.8 | 0.8 |
| V6 | 7.6 | - | 10 |
| TMB | 8.4 | 8.4 | 8.4 |

TABLE 7

| Example No. | Gel Time (Days) | Tg (°C) |
|---|---|---|
| 21 | 3 | 45.5 |
| | 5 | 49.0 |
| | 11 | 52 |
| 22 | 3 | 31 |
| | 5 | 33.5 |
| | 7 | 36.5 |
| 23 | 3 | 38 |
| | 4 | 40 |
| | 6 | 44 |
| | 7 | 46 |

TABLE 8

| Constituents | Example No. | |
|---|---|---|
| | 24 (% wt) | 25 (% wt) |
| Bis-Phenol F | 64.8 | 70.6 |
| TCEP | 5.1 | 15.1 |
| ETBN | 2 | - |
| MTBN | - | 0.5 |
| Borester 7 | 10 | 3.3 |
| Silane A-187 | 0.8 | 0.8 |
| Benzyl Alcohol | 1.3 | 1.3 |
| TMB | 6 | 8.4 |
| V6 | 10 | - |

TABLE 9

| Example No. | Gel Time (Days) | Tg(°C) |
|---|---|---|
| 24 | 3 | 56 |
| | 5 | 59 |
| 25 | 3 | 41 |
| | 7 | 45 |
| | 12 | 49 |
| | 17 | 52 |

TABLE 10

| Constituents | Example No. | |
|---|---|---|
| | 26 (wt %) | 27 (wt %) |
| Bis-Phenol F | 53.3 | 65.1 |
| TCEP | 5.1 | 7.5 |
| DER 736 | 10 | 5 |
| ETBN | 2.5 | 1.0 |
| Borester 33 | 10 | - |
| Borester 7 | - | 3.3 |
| Silane A-187 | 0.8 | 0.8 |
| Benzyl Alcohol | 1.3 | 1.3 |
| V6 | 10 | 7.6 |
| TMB | 7 | 8.4 |

TABLE 11

| Example No. | Gel Time (Days) | Tg(°C) |
|---|---|---|
| 26 | 3 | 38.5 |
| | 5 | 42.0 |
| 27 | 3 | 44.5 |
| | 5 | 49.5 |

TABLE 12

| Constituents | Example No. | | | |
|---|---|---|---|---|
| | 28 (% wt) | 29 (% wt) | 30 (% wt) | 31 (% wt) |
| Bis-Phenol F | 71.1 | 72.5 | 73.5 | 74.5 |
| TMB | 8.4 | 7 | 6 | 5 |
| Borester 7 | 3.3 | 3.3 | 3.3 | 3.3 |
| Benzyl Alcohol | 1.3 | 1.3 | 1.3 | 1.3 |
| Silane A-187 | 0.8 | 0.8 | 0.8 | 0.8 |
| TCEP | 15.1 | 15.1 | 15.1 | 15.1 |

TABLE 13

| Example No. | Tg(°C) | Gel Time |
|---|---|---|
| 28 | 50 | 3 |
| | 54 | 5 |
| 29 | 40 | 3 |
| | 47 | 7 |
| | 51 | 14 |
| 30 | 31 | 3 |
| | 39 | 7 |
| | 42 | 14 |
| 31 | 21 | 3 |
| | 25.5 | 7 |
| | 29 | 14 |

## Claims

1. A method of producing a translucent laminate, the method comprising the steps of: providing a mixture of an epoxy resin and a curing agent therefor; and curing the epoxy resin to form a translucent reaction product which forms an interlayer between two translucent panes, the curing step having a first phase in which the resin is partially cured relatively slowly, optionally at a relatively low temperature, and a second phase in which the curing of the resin is completed relatively rapidly, optionally at a relatively high temperature.

2. A method according to claim 1 wherein the mixture additionally comprises a boron compound which is not a curing agent for the epoxy resin and is adapted to impart fire resistance to the interlayer.

3. A method according to claim 2 wherein the boron compound is an organoboron compound such as a boroester or a boron anhydride which cannot act as a curing agent for the epoxy resin as a result of being sterically hindered and/or not having sufficient Lewis acid activity to cure the epoxy resin.

4. A method according to any one of claims 1 to 3 wherein the epoxy resin is additionally in admixture with at least one additive which is adapted to react with and/or form a separate phase in the epoxy resin thereby to reduce the brittleness of the resin interlayer.

5. A method according to claim 4 wherein the at least one additive comprises a reactive diluent which is adapted to react with the epoxy resin as a cross linking agent thereby to plasticise the resin interlayer.

6. A method according to claim 4 or claim 5 wherein the at least one additive comprises a liquid rubber which is adapted to form a two phase microstructure with the plastics resin thereby to toughen the resultant cured composition.

7. A method according to any foregoing claim wherein the uncured epoxy resin, and any substances in admixture therewith, is introduced into an interspace between the two translucent panes which are in a parallel opposed relationship and the resin is cured in place between the two panes.

8. A method according to claim 7 wherein the curing is controlled whereby the interlayer has a selected degree of rigidity.

9. A method according to claim 7 or 8 wherein the curing is controlled whereby the interlayer has a glass transition temperature of from 30 to 45°C.

10. A method according to any foregoing claim wherein the first curing phase is carried out at an ambient temperature of 10°C to 30°C.

11. A method according to any foregoing claim wherein the first curing phase is carried out for a period of from 1 to 20 days.

12. A method according to claim 11 wherein the first curing phase is carried out for a period of from 3 to 7 days.

13. A method according to claim 12 wherein the first curing step is carried out for a period of from 3 to 4 days.

14. A method according to any foregoing claim wherein the second curing phase is carried out at a temperature of from 100°C to 140°C.

15. A method according to claim 14 wherein the second curing phase is carried out for a period of from 2 to 5 hours.

16. A method according to any foregoing claim wherein the curing agent is trimethoxyboroxine.

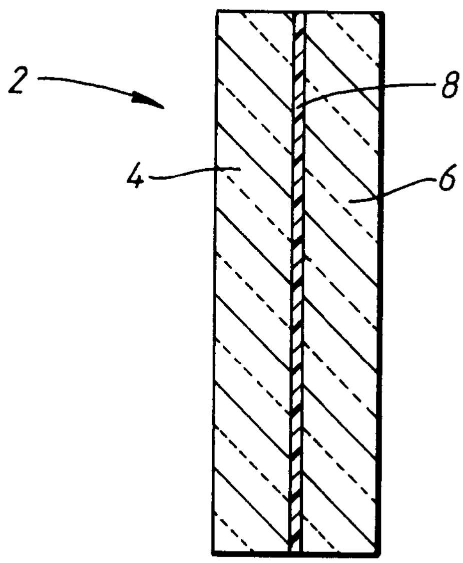


Fig.1.

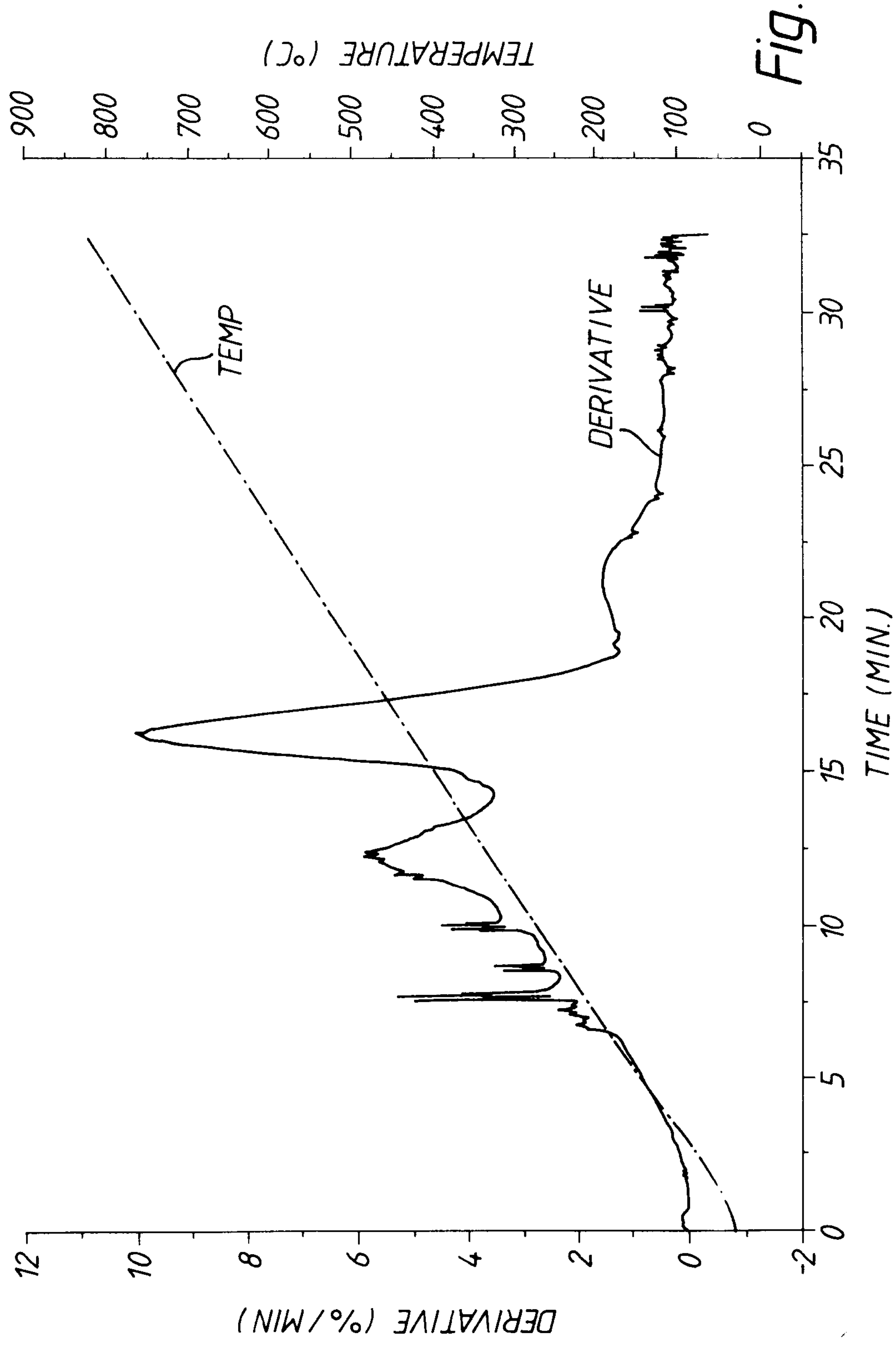
TEMPERATURE (°C)
900
800
700
600
500
400
300
200
100
0
TEMP
DERIVATIVE
DERIVATIVE (%/MIN)
12
10
8
6
4
2
0
-2
TIME (MIN.)
0
5
10
15
20
25
30
35

Fig.2.

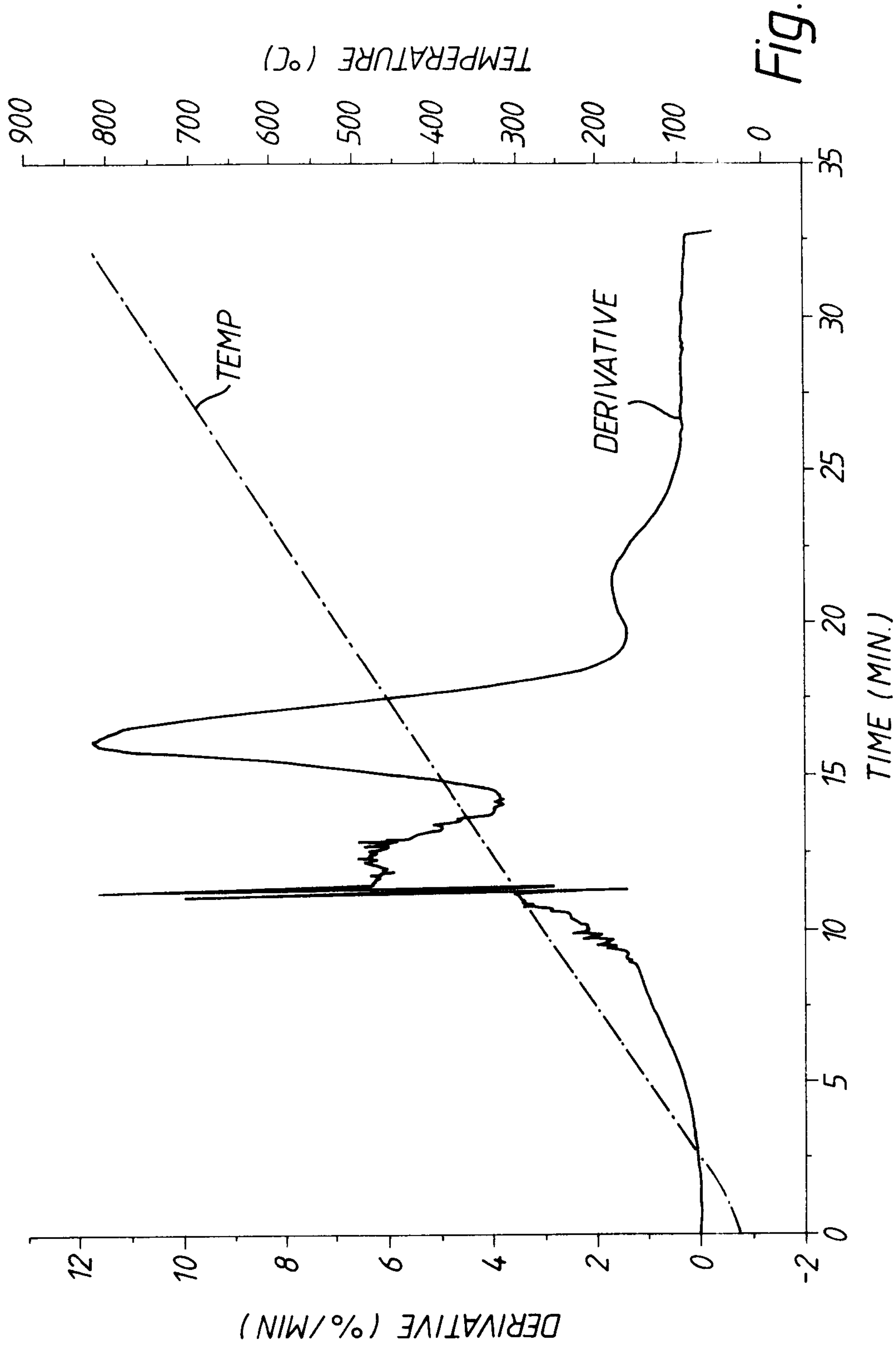
TEMPERATURE (°C)
900
800
700
600
500
400
300
200
100
0
TEMP
DERIVATIVE
DERIVATIVE (%/MIN)
12
10
8
6
4
2
0
-2
0
5
10
15
20
25
30
35
TIME (MIN.)

Fig.3.

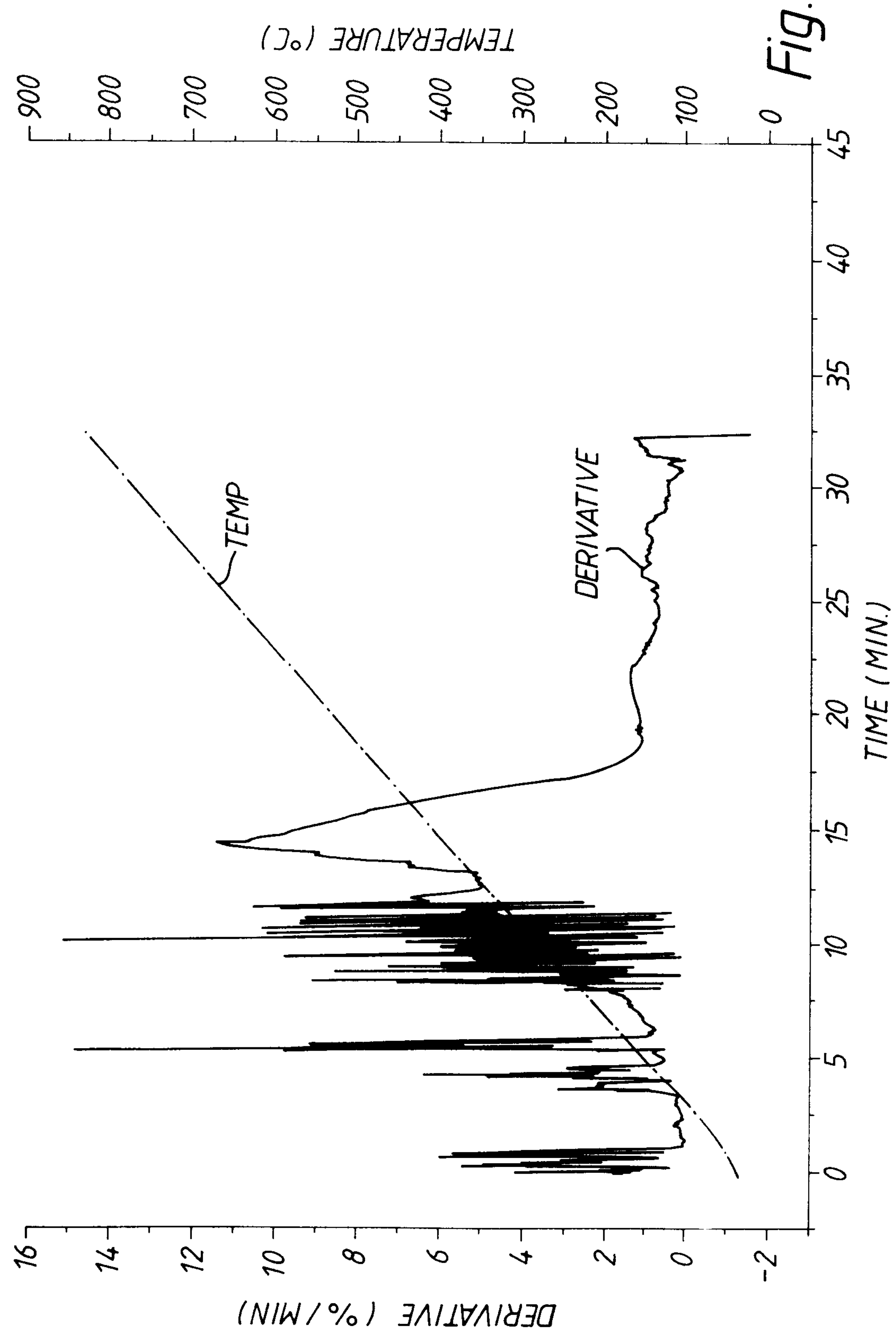
TEMPERATURE (°C)
0
100
200
300
400
500
600
700
800
900
TEMP
DERIVATIVE
DERIVATIVE (%/MIN)
-2
0
2
4
6
8
10
12
14
16
TIME (MIN.)
0
5
10
15
20
25
30
35
40
45

Fig. 4.

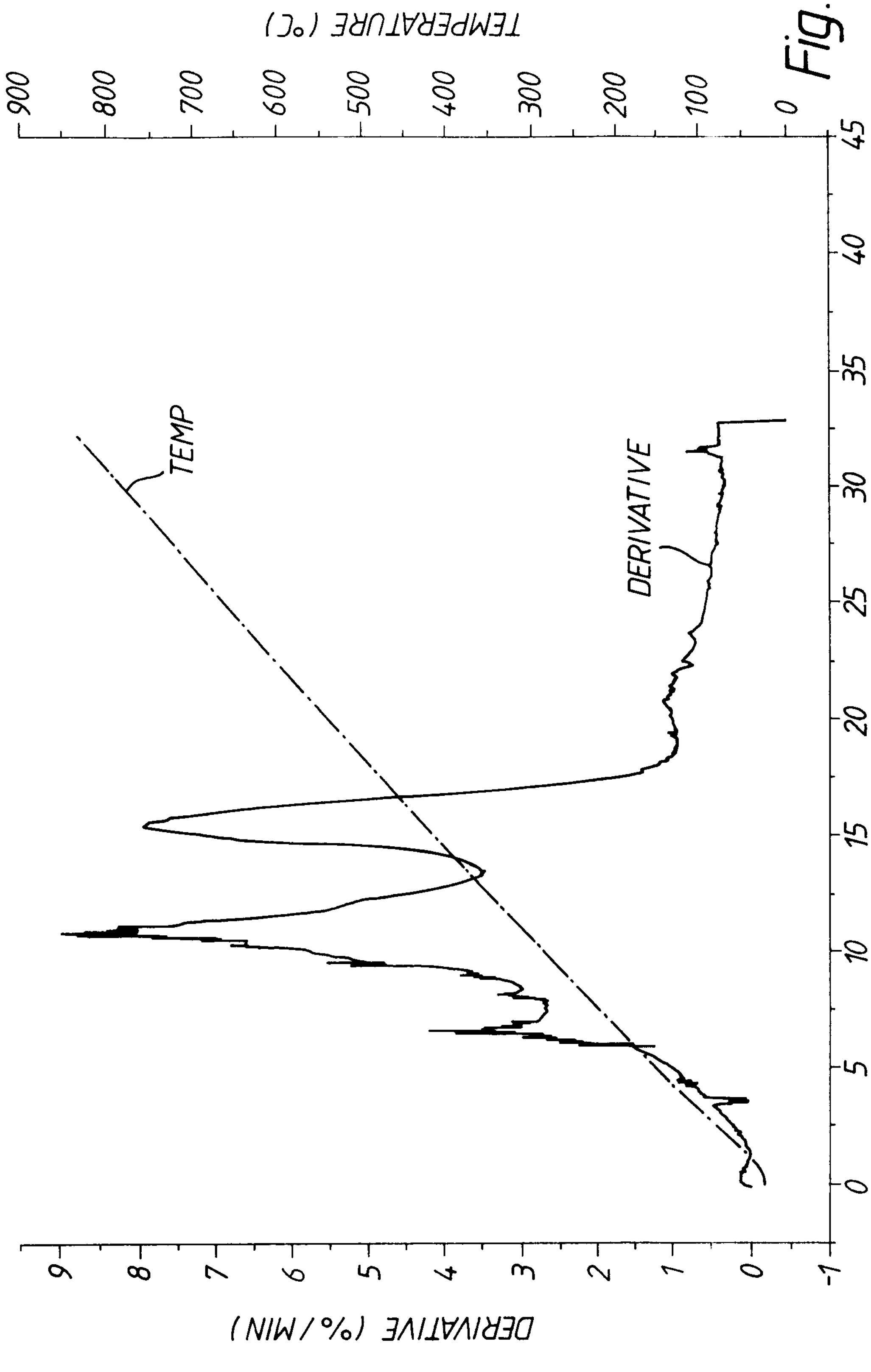
TEMPERATURE (°C)
900
800
700
600
500
400
300
200
100
0
TEMP
DERIVATIVE
DERIVATIVE (%/MIN)
9
8
7
6
5
4
3
2
1
0
-1
TIME (MIN.)
0
5
10
15
20
25
30
35
40
45

Fig.5.

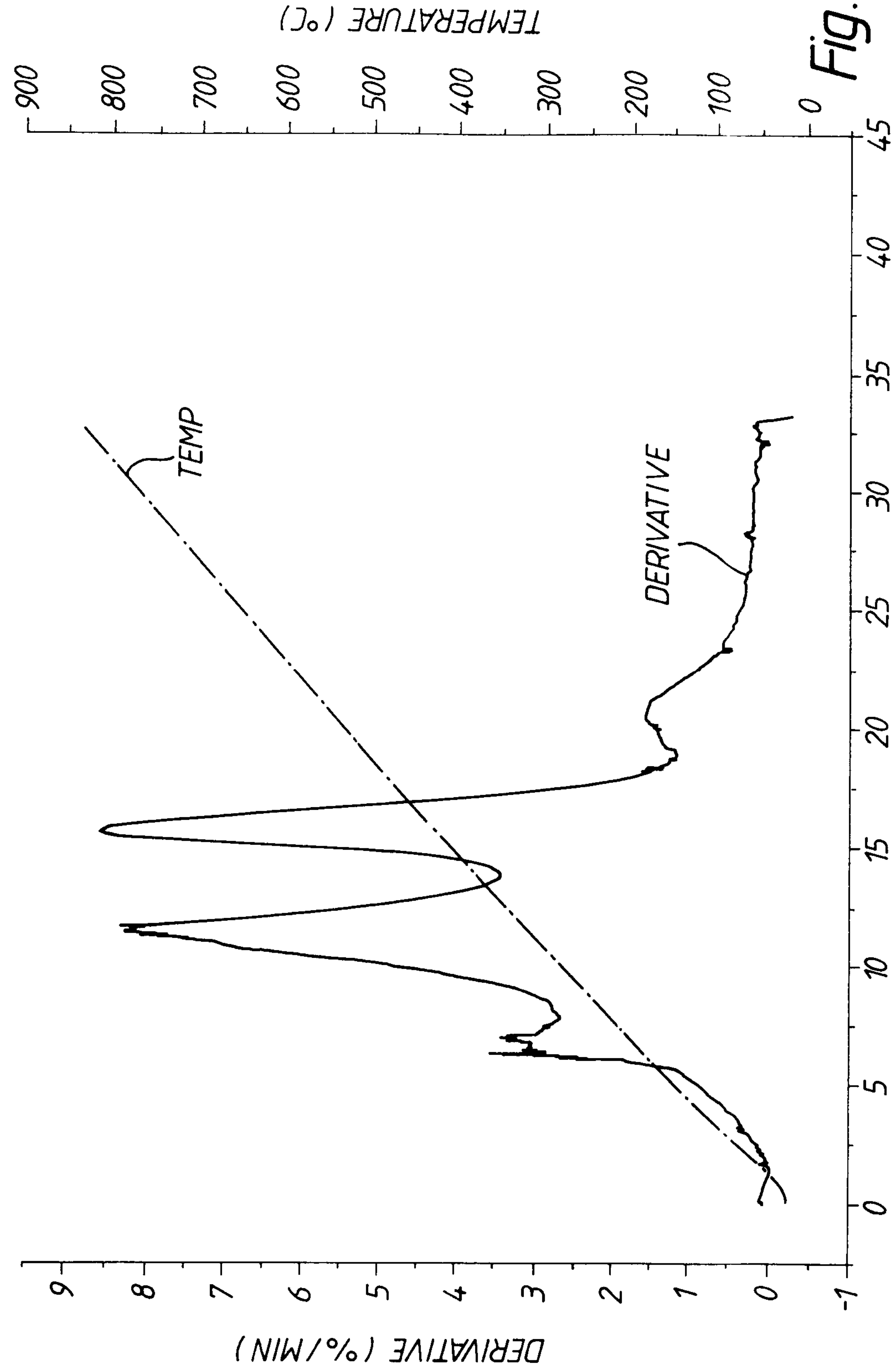
TEMPERATURE (°C)
0
100
200
300
400
500
600
700
800
900
DERIVATIVE (%/MIN)
-1
0
1
2
3
4
5
6
7
8
9
TIME (MIN.)
0
5
10
15
20
25
30
35
40
45
TEMP
DERIVATIVE

Fig.6.

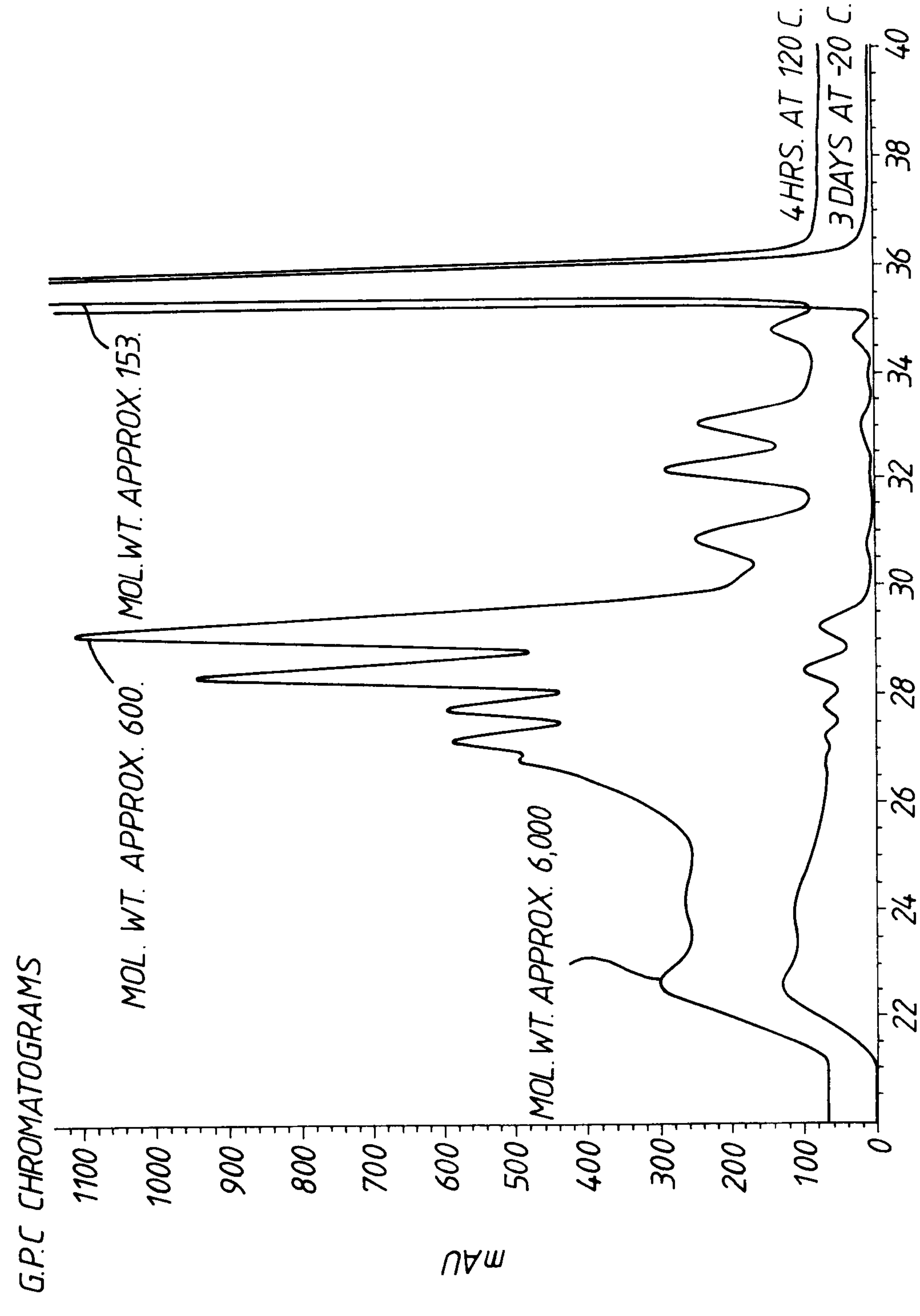
G.P.C CHROMATOGRAMS
mAU
1100
1000
900
800
700
600
500
400
300
200
100
0
22
24
26
28
30
32
34
36
38
40
TIME (MIN.)
MOL. WT. APPROX. 6,000
MOL. WT. APPROX. 600.
MOL. WT. APPROX. 153.
4 HRS. AT 120 C.
3 DAYS AT -20 C.

Fig. 7.

Fig.8.

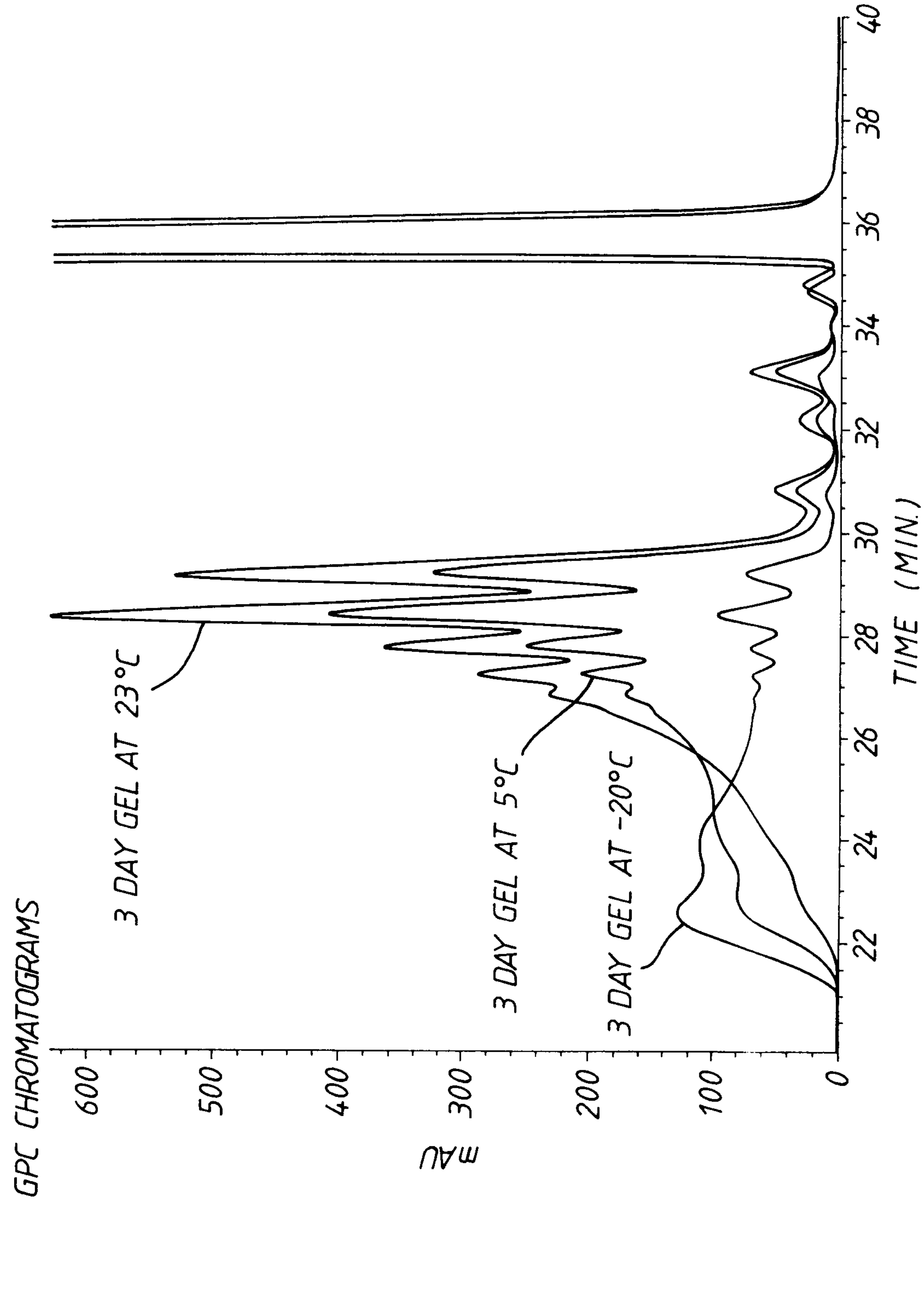
GPC CHROMATOGRAMS
mAU
0
100
200
300
400
500
600
22
24
26
28
30
32
34
36
38
40
TIME (MIN.)
3 DAY GEL AT 23°C
3 DAY GEL AT 5°C
3 DAY GEL AT -20°C

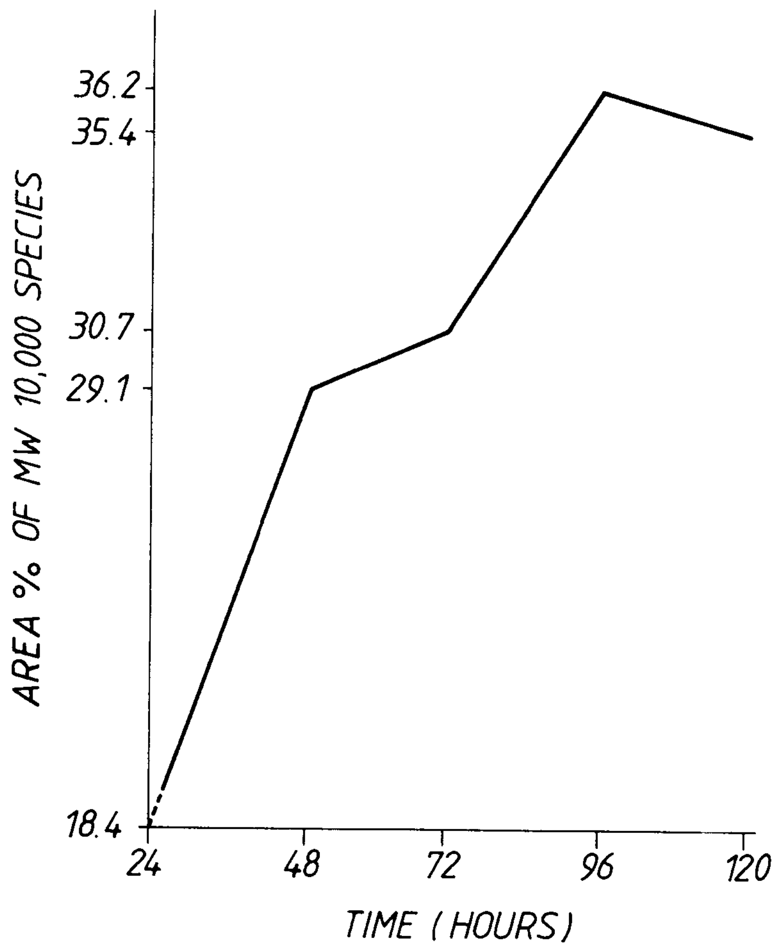
AREA % OF MW 10,000 SPECIES
36.2
35.4
30.7
29.1
18.4
24
48
72
96
120
TIME (HOURS)

Fig. 9.

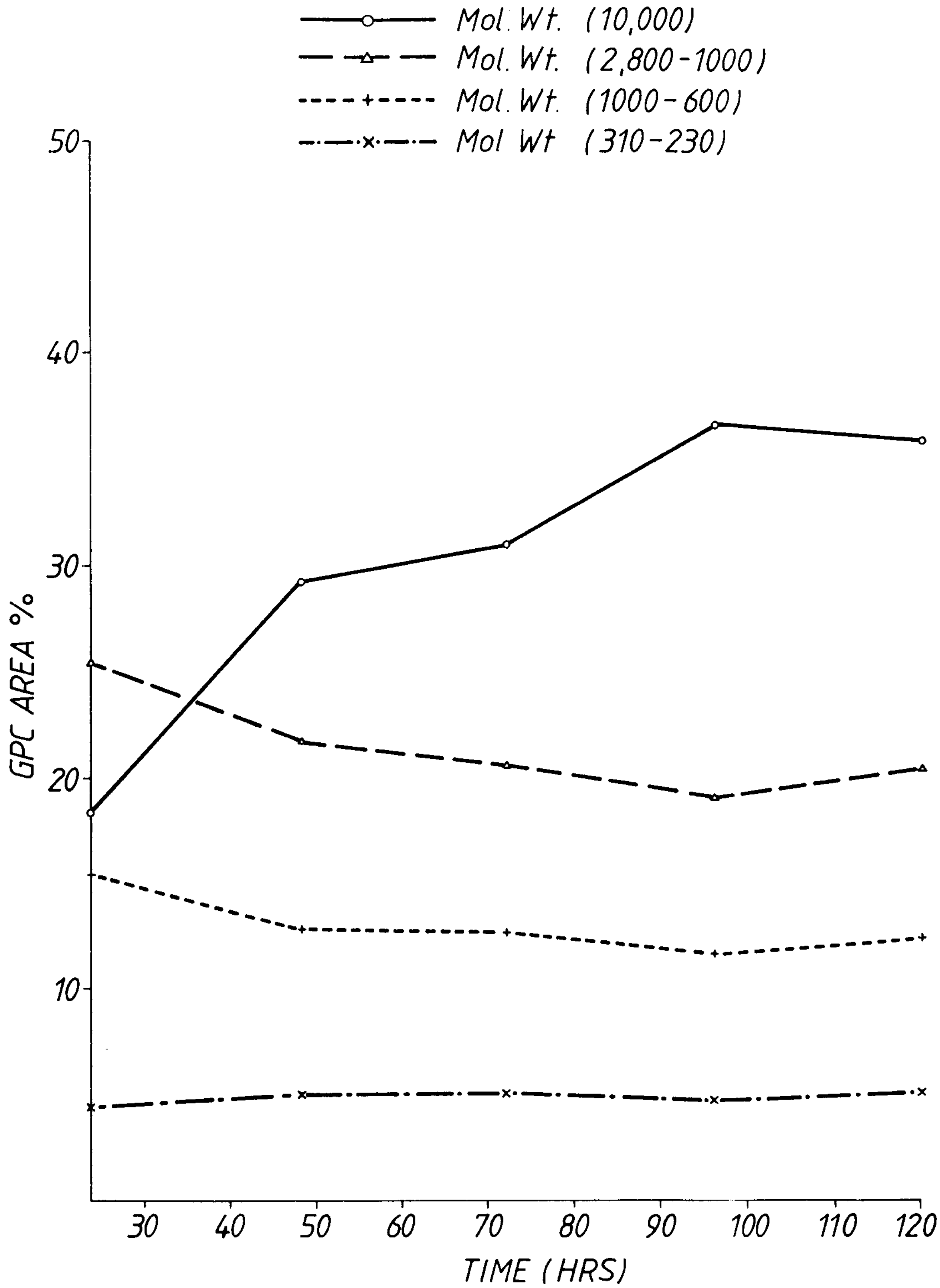
Mol. Wt. (10,000)
Mol. Wt. (2,800-1000)
Mol. Wt. (1000-600)
Mol Wt (310-230)
50
40
30
20
10
GPC AREA %
30
40
50
60
70
80
90
100
110
120
TIME (HRS)

Fig.10.

European Patent Office

# EUROPEAN SEARCH REPORT

Application Number

EP 93 30 1144

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WO-A-9 116 198 (MILLER CONSTRUCTION LTD) * claims 1,4,12 * | 1,7 | C08G59/40 B32B17/10 B32B27/38 C08K5/55 |
| D,A | GB-A-2 058 076 (GOODYEAR AEROSPACE CORP.) * claims 1-3; table 2 * | 1,5,16 | |
| A | US-A-4 412 052 (J.R.URAM,JR.) * column 1, line 59 - line 64; table 2 * | 1,5,16 | |

TECHNICAL FIELDS SEARCHED (Int. Cl.5 )

C08G
C08K
B32B

The present search report has been drawn up for all claims

| Place of search | Date of completion of the search | Examiner |
|---|---|---|
| BERLIN | 18 MAY 1993 | ANGIOLINI D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)